# EUROPÄISCHE PATENTSCHRIFT

(11) **EP 2 142 399 B1**
(45) Veröffentlichungstag und Bekanntmachung des Hinweises auf die Patenterteilung: **02.05.2012**
(21) Anmeldenummer: 07822103.3
(22) Anmeldetag: 31.10.2007
(51) Int. Cl.: B60N 3/02

(54) **AN EINEM BAUTEIL FORMSCHLÜSSIG FESTGELEGTE HALTEEINRICHTUNG**
HOLDING UNIT POSITIVELY CONNECTED TO A COMPONENT
DISPOSITIF DE MAINTIEN FIXÉ SUR UN COMPOSANT PAR ENGAGEMENT POSITIF

(30) Priorität: 10.11.2006 DE 202006017149 U; 12.07.2007 DE 202007009721 U
(43) Veröffentlichungstag der Anmeldung: 13.01.2010
(73) Patentinhaber: A. Raymond et Cie., 38000 Grenoble (FR); Key Plastics Germany GmbH, 57368 Lennestadt (DE)
(72) Erfinder: SPITZ, Uwe, 79618 Rheinfelden (DE)
(74) Vertreter: Rüttgers, Joachim
(86) Internationale Anmeldenummer: PCT/EP2007/061756
(87) Internationale Veröffentlichungsnummer: WO 2008/055838

(56) Entgegenhaltungen:
- WO-A-2006/052038
- DE-A1- 10 055 647
- GB-A- 2 420 824
- US-A- 4 912 808

## Beschreibung

Die Erfindung betrifft eine an einem Bauteil formschlüssig festgelegte Halteeinrichtung entsprechend dem Oberbegriff des Anspruchs 1.

Derartige Halteeinrichtungen finden beispielsweise im Automobilbau Verwendung, wo sie der Befestigung von Fahrzeugkomponenten, wie Haltegriffen, Türgriffen oder dergleichen dienen. Dabei wird das Bauteil vornehmlich von einem Karosserieteil gebildet, das im weitesten Sinn plattenförmig gestaltet ist, also eine Wandung aufweist, die von dem Spreizelement durchtreten ist.

Zur Befestigung der Halteeinrichtung sind verschiedene Lösungen bekannt, die jedoch allesamt mit erheblichen Nachteilen behaftet sind.

So gehören zum Stand der Technik Halteeinrichtungen in Form von Metallklammern, die mit dem Bauteil verschraubt und anschließend mit dem Tragteil verrastet werden. Naturgemäß stellt das Verschrauben einen nur mit erheblichen Kosten zu realisierenden Fertigungs- bzw. Montagevorgang dar, der gerade bei einer Serienfertigung, wie sie im Automobilbau gegeben ist, besonders beklagenswert ist.

Daneben sind Metallklammern bekannt, die, mit dem Tragteil verbunden, am Bauteil mittels einer Sperre gehalten werden, wobei diese Metallklammern als Spreizelement ausgebildet sind. Allerdings ist bei dieser Art der Befestigung nicht gewährleistet, dass die Halteeinrichtung in jedem Fall sicher am Bauteil befestigt, d.h. mit dem Bauteil verrastet ist. Eine zuverlässige diesbezügliche Kontrolle ist nicht möglich, zumindest nicht mit einem wirtschaftlich vertretbaren Aufwand.

Eine Halteeinrichtung gattungsgemäßer Art ist aus der US A 4,912,808 A bekannt.

Aus der DE 100 55 647 A1 ist eine als Baueinheit vormontierte Halteeinrichtung bekannt.

Der Erfindung liegt daher die Aufgabe zugrunde, eine Halteeinrichtung der gattungsgemäßen Art so weiterzuentwickeln, dass sie mit konstruktiv geringem Aufwand einfacher und kostengünstiger montierbar und eine sichere, einfach zu kontrollierende Verrastung mit dem Bauteil möglich ist.

Diese Aufgabe wird durch eine Halteeinrichtung mit den Merkmalen des Anspruchs 1 gelöst.

Eine in diesem Sinne ausgebildete Halteeinrichtung bietet gegenüber dem Stand der Technik eine ganze Reihe von Vorteilen. Es ist zunächst einmal die leichte Montagemöglichkeit der Halteeinrichtung zu nennen, die im wesentlichen Masse zu einer Fertigungsoptimierung in diesem Bereich beiträgt.

Die Halteeinrichtung kann als Baueinheit vormontiert sein, wobei das Sperrglied unverlierbar in die Baueinheit Tragteil/Spreizelement eingesteckt ist und durch Anlage des Klemmschenkels am Tragteil auch das als separates Teil vorliegende Spreizelement hält.

In dieser Position ragt das Sperrglied aus dem Tragteil heraus, wobei das Sperrglied in diesem Bereich als Andruckplatte ausgebildet ist, mittels der das Sperrglied nach einem Einstecken der Halteeinrichtung in ein Aufnahmeloch des Bauteiles in das Spreizelement bzw. das Tragteil eindrückbar ist.

In dieser Endstellung schließt die Andruckplatte mit dem Tragteil vorzugsweise flächenbündig ab, wodurch erkennbar ist, dass eine vorschriftsmäßige Verrastung mit dem Bauteil erfolgt ist.

Nach einer vorteilhaften Ausbildung der Erfindung ist vorgesehen, dass das Sperrglied mindestens zwei, sich gegenüberliegende Klemmschenkel aufweist, die jeweils nach Art einer Wippe ausgebildet sind und die etwa im Mittenbereich an einer Anschlusslasche angelenkt sind, die wiederum fest mit der Andruckplatte verbunden ist.

Je nach Stellung des Sperrgliedes bewegt sich der jeweils obere oder untere Teil der Klemmschenkel, wobei die oberen Schenkelteile in vormontierter Stellung des Sperrgliedes am Tragteil anliegen und die unteren Schenkelteile sich im Spreizelement abstützen.

Zum Durchtritt der Klemmschenkel weist das Spreizelement neben den federnden Zungen angeordnete Lösungsschlitze auf, die, je nach Stellung des Sperrgliedes vom oberen oder unteren Schenkelteil durchtreten werden. Die Ortsbestimmung "obere und untere Schenkelteile" bezieht sich auf die Andruckplatte, d.h., die oberen Schenkelteile sind der Andruckplatte zugewandt, während die unteren Schenkelteile entsprechend abgewandt ausgerichtet sind.

Weitere vorteilhafte Ausbildungen der Erfindung sind in den Unteransprüchen gekennzeichnet.

Ein Ausführungsbeispiel wird nachfolgend anhand der beigefügten Zeichnungen beschrieben.

Es zeigen:

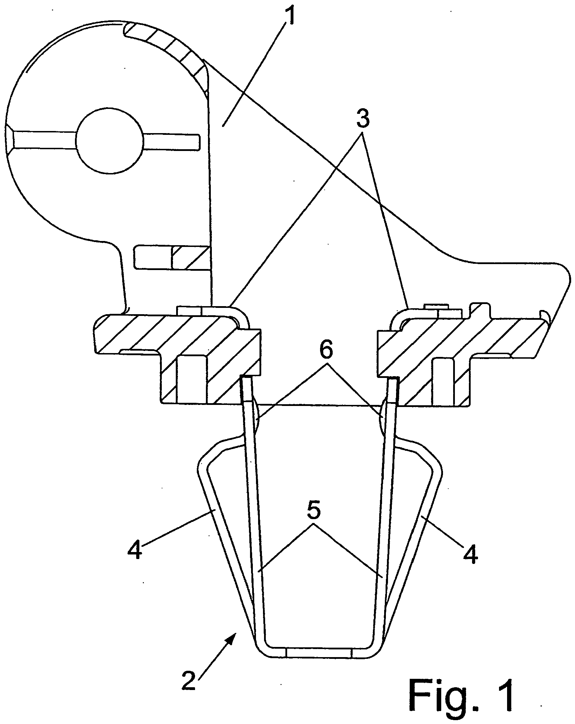

- Figuren 1 bis 4: eine Halteeinrichtung in jeweils einer unterschiedlichen Montagestellung in einer geschnittenen Seitenansicht.

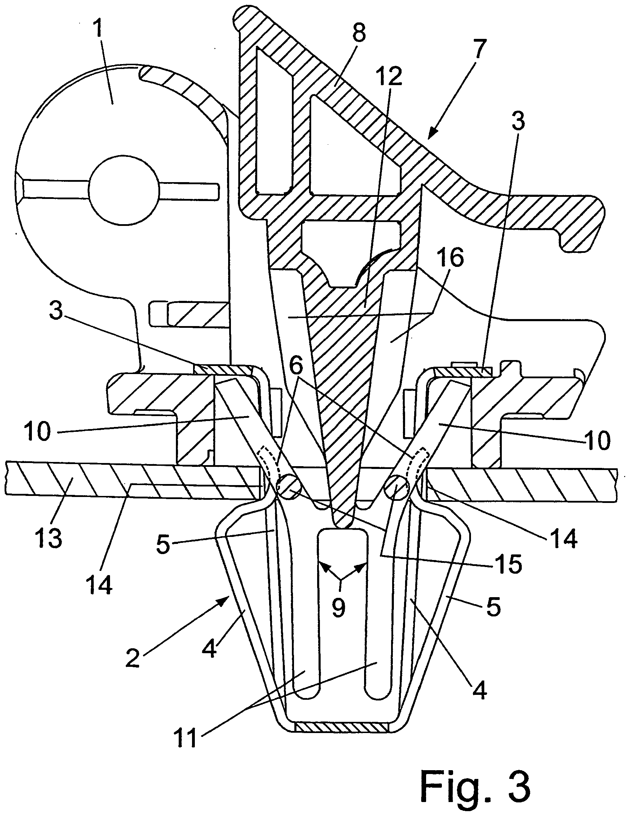

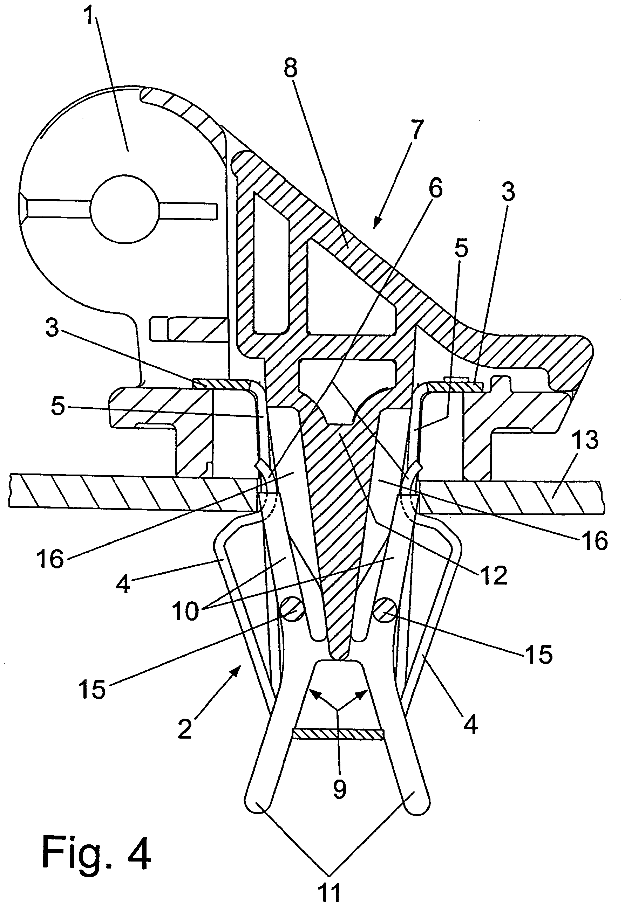

In den Figuren ist eine an einem plattenförmigen Bauteil 13 (Figuren 3 und 4) formschlüssig festgelegte Halteeinrichtung dargestellt, mit einem Tragteil 1, an dem beispielsweise Funktionsteile eines Kraftfahrzeuges befestigbar sind, und einem daran angeschlossenen Spreizelement 2, das radial auslenkbare, federnde Zungen 4 aufweist.

Das Spreizelement 2 durchtritt das Bauteil 13 durch ein Loch 14 und liegt zur Verschiebesicherung der Halteeinrichtung insgesamt an der dem Tragteil 1 abgewandten Rückseite des Bauteiles 13 an.

In der Figur 1 sind das Tragteil 1 und das Spreizelement 2 zu einer Baueinheit zusammengefasst, die in einem folgenden Arbeitsschritt durch das Einstecken eines Sperrgliedes 7 komplettiert wird.

Dieses Sperrglied 7 weist zwei erkennbare, sich gegenüberliegende Klemmschenkel 9 auf, die im Sinne einer Wippe in einer Anschlusslasche 12 des Sperrgliedes angelenkt sind, wobei jeder Klemmschenkel 9 aus einem oberen Schenkelteil 10 und einem unteren Schenkelteil 11 besteht. Die Anlenkung der Klemmschenkel 9 an der Anschlusslasche 12 erfolgt nach Art eines Filmscharniers, d.h., die Klemmschenkel sind im Wesentlichen ohne Einfluss von Rückstellkräften schwenkbar. Im übrigen sind das Sperrglied 7 im Bereich Anschlusslasche 12/Klemmschenkel 9 und das Spreizelement 2 quer zur Verschwenkrichtung bzw. -ebene der Klemmschenkel 9 gesehen spiegelsymmetrisch ausgebildet.

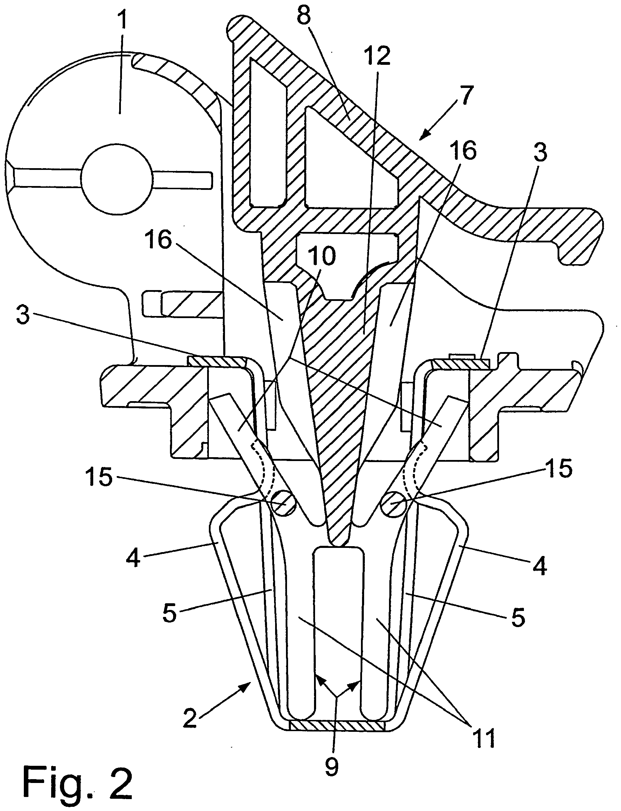

In der Figur 2, in der, wie erwähnt, die Halteeinrichtung als vormontierte Baueinheit dargestellt ist, wie sie zur Befestigung am Bauteil 13 zum Einsatz kommt, ist erkennbar, dass das Spreizelement 2 an zwei sich gegenüberliegenden, den Zungen 4 abgewandten Enden mit Kragen 3 versehen ist, die am Halteteil 1 anliegen.

Jeweils an den oberen Schenkelteilen 10 angeformte Anschlagzapfen 15 stützen sich in Spreizstellung der oberen Schenkelteile 10 am Spreizelement 2 ab, wodurch eine Begrenzung des Schwenkweges der oberen Schenkelteile 10 und damit eine Zentrierung des Spreizelementes 7 erreicht wird.

Beim Einstecken des Sperrgliedes 7 werden durch das Einführen in das Spreizelement 2, insbesondere beim Durchtreten des durch Kröpfungen 6 der Zungen 4 begrenzten Innenraumes des Spreizelementes 2 die Klemmschenkel 9 so verschwenkt, dass die oberen Schenkelteile 10 jeweils einen Längsschlitz 5 des Spreizelementes 2 durchtreten, bis sie am Tragteil 1 zur Anlage kommen, während die unteren Schenkelteile 11 an einem Boden des Spreizelementes 2 anliegen.

In dieser vormontierten Position ist das Sperrglied 7, das im Übrigen gegenüber dem Tragteil 1 im Bereich seiner Andruckplatte 8 vorsteht, verliergesichert gehalten, ebenso wie das Spreizelement 2 gegenüber dem Tragteil 1.

Bei einer Montage der Halteeinrichtung wird das Spreizelement 2 durch das Loch 14 des Bauteiles 13 hindurchgesteckt, wobei die oberen Schenkelteile 10 zunächst die in Einschieberichtung obere Kante des Loches 14 kontaktieren. Hierdurch wird das Sperrglied 7 gegenüber dem Tragteil 1 herausgedrückt, bis die oberen Schenkel 10 am zugeordneten Kragen 3 zur Anlage kommen. Dieses Herausdrücken des Sperrgliedes 7 begünstigt den letzten Montageschritt, nämlich die Sperrung der federnden Zungen 4.

Unter Zusammendrücken der Zungen 4 werden im weiteren Montageverlauf die oberen Schenkelteile 10 durch die Leibung des Loches 14 aufeinander zu verschwenkt, während die unteren Schenkelteile 11 entsprechend aufgespreizt werden unter Durchtritt der Längsschlitze 5, wobei gleichzeitig die in der Figur 2 erkennbare Verschiebesicherung des Sperrgliedes 7 in Richtung des Tragteiles 1 aufgehoben wird.

Durch Eindrücken des Sperrgliedes 7 in das Tragteil 1 und das Spreizelement 2 gelangen die freien Enden der oberen Schenkelteile 10 in einen Anlagebereich mit der Leibung des Loches 14, während die unteren Schenkelteile 11 durch die Längsschlitze 5 aus dem Bereich des Bodens des Spreizelementes 2 nach unten hin durchgedrückt werden, wodurch eine Sperrung des Spreizelementes 2 gegeben ist.

Gleichzeitig werden an die Anschlusslasche 12 angeformte, keilförmig zulaufende Stege 16 gegen die jeweils konvexe Seite der zugeordneten Kröpfung 6 gedrückt, so dass die Kröpfungen 6 mit ihren konkaven Bereichen an den Kanten des Loches 14 anliegen. Durch diese gebildete Zugsicherung wird erreicht, dass bei einer an die Halteeinrichtung angreifenden Zugbelastung die Zungen 4 nicht gegeneinander gerichtet ausweichen können.

Wie die Figur 4 weiter deutlich zeigt, liegt die Andruckplatte 8 in dieser Endstellung flächenbündig mit dem Tragteil 1 ein. Hierdurch ist auf sehr einfache Art und Weise eine korrekte Verrastung der Halteeinrichtung insgesamt gegeben.

### Bezugszeichenliste

- 1: Tragteil
- 2: Spreizelement
- 3: Kragen
- 4: Zunge
- 5: Schlitz
- 6: Kröpfung
- 7: Sperrglied
- 8: Andruckplatte
- 9: Klemmschenkel
- 10: oberes Schenkelteil
- 11: unteres Schenkelteil
- 12: Anschlusslasche
- 13: Bauteil
- 14: Loch
- 15: Anschlagzapfen
- 16: Steg

## Patentansprüche

1. An einem Bauteil (13) formschlüssig festgelegte Halteeinrichtung, mit einem Tragteil (1) und einem daran angeschlossenen, radial auslenkbare, federnde Zungen (4) aufweisenden, das Bauteil (13) durchtretenden Spreizelement (2), das zur Verschiebesicherung der Halteeinrichtung an der dem Tragteil (1) abgewandten Rückseite des Bauteiles (13) anliegt, wobei in die Baueinheit Tragteil (1)/Spreizelement (2) ein Sperrglied (7) eingesetzt ist, das mindestens einen angelenkten Klemmschenkel (9) aufweist, der sich am Bauteil (13) abstützt, **dadurch gekennzeichnet, dass** der Klemmschenkel (9) nach Art einer Wippe an einer Anschlusslasche (12) des Sperrgliedes (7) angeschlossen ist.

2. Halteeinrichtung nach Anspruch 1, **dadurch gekennzeichnet, dass** der Klemmschenkel (9) ein oberes Schenkelteil (10) und ein unteres Schenkelteil (11) aufweist.

3. Halteeinrichtung nach einem der vorhergehenden Ansprüche, **dadurch gekennzeichnet, dass** das Sperrglied (7) mit einer Andruckplatte (8) versehen ist, die an der Anschlusslasche (12) auf der dem oberen Schenkelteil (10) abgewandten Seite angeschlossen ist.

4. Halteeinrichtung nach einem der vorhergehenden Ansprüche, **dadurch gekennzeichnet, dass** die Andruckplatte (8) in Funktionsstellung der Halteeinrichtung weitgehend flächenbündig mit dem Tragteil (1) verläuft.

5. Halteeinrichtung nach einem der vorhergehenden Ansprüche, **dadurch gekennzeichnet, dass** das obere Schenkelteil (10) an einer Leibung eines Loches (14) des Bauteiles (13) anliegt.

6. Halteeinrichtung nach einem der vorhergehenden Ansprüche, **dadurch gekennzeichnet, dass** in Schwenkrichtung des Klemmschenkels (9) gesehen gegenüberliegend ein weiterer Klemmschenkel (9) vorgesehen ist.

7. Halteeinrichtung nach einem der vorhergehenden Ansprüche, **dadurch gekennzeichnet, dass** das Tragteil (1), das Spreizelement (2) und das Sperrglied (7) als Baueinheit vormontiert sind.

8. Halteeinrichtung nach einem der vorhergehenden Ansprüche, **dadurch gekennzeichnet, dass** in vormontierter Stellung das obere Schenkelteil (10) jedes Klemmschenkels (9) einen Längsschlitz (5) des Spreizelementes (3) durchtritt, während das untere Schenkelteil (11) an einem Boden des Spreizelementes (3) aufsteht.

9. Halteeinrichtung nach einem der vorhergehenden Ansprüche, **dadurch gekennzeichnet, dass** in vormontierter Stellung die Andruckplatte (8) über das Tragteil (1) vorsteht.

10. Halteeinrichtung nach einem der vorhergehenden Ansprüche, **dadurch gekennzeichnet, dass** in montierter Stellung das untere Schenkelteil (11) den Längsschlitz (5) durchtritt.

11. Halteeinrichtung nach einem der vorhergehenden Ansprüche, **dadurch gekennzeichnet, dass** das Sperrglied (7) im Bereich Anschlusslasche (12)/Klemmschenkel (9) und das Spreizelement (2) quer zur Verschwenkrichtung der Klemmschenkel (9) gesehen spiegelsymmetrisch ausgebildet sind.

12. Halteeinrichtung nach einem der vorhergehenden Ansprüche, **dadurch gekennzeichnet, dass** an den oberen Schenkelteilen (10) Anschlagzapfen (15) angeformt sind, die in vormontierter Stellung der Baueinheit Tragteil (1)/Spreizelement (2) am Spreizelement (2) anliegen.

13. Halteeinrichtung nach einem der vorhergehenden Ansprüche, **dadurch gekennzeichnet, dass** an die Anschlusslasche (12) Stege (16) angeformt sind. mit denen die Zungen (4) in Funktionsstellung der Halteeinrichtung gegen die Wandung des Loches (14) gepresst sind.

14. Halteeinrichtung nach einem der vorhergehenden Ansprüche, **dadurch gekennzeichnet, dass** die sich gegenüberliegenden Stege (16) in Einschubrichtung der Halteeinrichtung keilförmig sich verjüngend geformt sind.

## Claims

1. A holding unit positively connected to a component (13), comprising a supporting part (1) and a spreading element (2) connected thereto which passes through the component (13), and which has radially extendable spring guides (4) and which, for the safety protection of the holding unit, abuts the rear side of the component (13) facing away from the supporting part (1), a locking element (7) being inserted in the unit supporting part (1)/spreading element (2) and comprising at least one pivotally hinged clamping leg (9) supported at the component (13), **characterized in that** the clamping leg (9) is connected in the manner of a rocker to a connection lug (12) of the locking element (7).

2. The holding unit according to claim 1, **characterized in that** the clamping leg (9) comprises an upper leg portion (10) und a lower leg portion (11).

3. The holding unit according to one of the preceding claims, **characterized in that** the locking element (7) is provided with a pressure plate (8), which is connected to the connection lug (12) on the side facing away from the upper leg portion (10).

4. The holding unit according to one of the preceding claims, **characterized in that** the pressure plate (8) extends, in the functional position of the holding device, substantially areally flush with the supporting part (1).

5. The holding unit according to one of the preceding claims, **characterized in that** the upper leg portion (10) abuts an intrados of a hole (14) of the component (13).

6. The holding unit according to one of the preceding claims, **characterized in that**, as viewed in the pivoting direction of the clamping leg (9), another clamping leg (9) is provided on the opposite side.

7. The holding unit according to one of the preceding claims, **characterized in that** the supporting part (1), the spreading element (2) and the locking element (7) are pre-assembled as a unit.

8. The holding unit according to one of the preceding claims, **characterized in that** in the pre-assembled position, the upper leg portion (10) of each clamping leg (9) passes through a longitudinal slot (5) of the spreading element (3), whereas the lower leg portion (11) is supported at a bottom of the spreading element (3).

9. The holding unit according to one of the preceding claims, **characterized in that** in the pre-assembled position, the pressure plate (8) projects beyond the supporting part (1).

10. The holding unit according to one of the preceding claims, **characterized in that** in the assembled position, the lower leg portion (11) passes through the longitudinal slot (5).

11. The holding unit according to one of the preceding claims, **characterized in that** the locking element (7), in the area of the connection lug (12)/clamping leg (9) and the spreading element (2) are configured, as viewed transversely to the pivoting direction of the clamping leg (9), in mirror-image symmetry.

12. The holding unit according to one of the preceding claims, **characterized in that** at the upper leg portions (10), stop pins (15) are formed abutting, in the pre-assembled position of the unit supporting part (1)/spreading element (2), the spreading element (2).

13. The holding unit according to one of the preceding claims, **characterized in that** at the connection lug (12), webs (16) are formed, by means of which the spring guides (4), in the functional position of the holding device, are pressed against the wall of the hole (14).

14. The holding unit according to one of the preceding claims, **characterized in that** the opposing webs (16) are formed, in the direction of insertion of the holding device, to taper off in a wedge-shaped manner.

## Revendications

1. Dispositif de maintien fixé sur un composant (13) par engagement positif comportant un élément de support (1) et un élément d'écartement (2) traversant le composant (13) qui y est raccordé et présentant des lames élastiques (4) pouvant être déviées radialement et qui est en contact avec le dos du composant (13) détourné de l'élément de support (1), afin d'empêcher le déplacement du dispositif de maintien, dans l'unité de construction élément de support (1)/élément d'écartement (2) un élément d'arrêt (7) étant prévu qui comporte au moins une branche de blocage (9) articulée qui s'appuie sur le composant (13), **caractérisé en ce que** la branche de blocage (9) est liée à la manière d'un basculeur à une patte de connexion (12) de l'élément d'arrêt (7).

2. Dispositif de maintien selon la revendication 1, **caractérisé en ce que** la branche de blocage (9) comprend une partie supérieure de la branche (10) et une partie inférieure de la branche (11).

3. Dispositif de maintien selon une des revendications précédentes, **caractérisé en ce que** l'élément d'arrêt (7) est pourvu d'une plaque de pression (8), qui est liée à la patte de connexion (12) au côté détourné de la partie supérieure de la branche (10).

4. Dispositif de maintien selon une des revendications précédentes, **caractérisé en ce que** la plaque de pression (8) s'étend, dans la position fonctionnelle du dispositif de maintien, de façon essentiellement continue à l'élément de support (1).

5. Dispositif de maintien selon une des revendications précédentes, **caractérisé en ce que** la partie supérieure de la branche (10) s'applique à un intrados d'un trou (14) du composant (13).

6. Dispositif de maintien selon une des revendications précédentes, **caractérisé en ce que**, vu dans le sens de pivotement de la branche de blocage (9), une autre branche de blocage (9) est prévue sur le côté opposé.

7. Dispositif de maintien selon une des revendications précédentes, **caractérisé en ce que** l'élément de support (1), l'élément d'écartement (2) et l'élément d'arrêt (7) sont préassemblés comme unité de construction.

8. Dispositif de maintien selon une des revendications précédentes, **caractérisé en ce que** dans la position préassemblée, la partie supérieure de la branche (10) de chaque branche de blocage (9) passe à travers une fente longitudinale (5) de l'élément d'écartement (3), tandis que la partie inférieure de la branche (11) est posé sur un fond de l'élément d'écartement (3).

9. Dispositif de maintien selon une des revendications précédentes, **caractérisé en ce que** dans la position préassemblée, la plaque de pression (8) fait saillie hors de l'élément de support (1).

10. Dispositif de maintien selon une des revendications précédentes, **caractérisé en ce que** dans la position assemblée, la partie inférieure de la branche (11) passe à travers la fente longitudinale (5).

11. Dispositif de maintien selon une des revendications précédentes, **caractérisé en ce que** l'élément d'arrêt (7), dans le domaine de la patte de connexion (12)/branche de blocage (9), et l'élément d'écartement (2) sont configurés, vu perpendiculairement à la direction de pivotement de la branche de blocage (9), de manière symétrique dans un miroir.

12. Dispositif de maintien selon une des revendications précédentes, **caractérisé en ce qu'**aux parties supérieures de la branche (10), des ergots d'arrêt (15) sont formés en contact, dans la position préassemblée de l'unité de construction élément de support (1)/élément d'écartement (2), avec l'élément d'écartement (2).

13. Dispositif de maintien selon une des revendications précédentes, **caractérisé en ce qu'**à la patte de connexion (12), des barrettes (16) sont formées, au moyen desquelles les lames élastiques (4), dans la position fonctionnelle du dispositif de maintien, sont poussées contre la paroi du trou (14).

14. Dispositif de maintien selon une des revendications précédentes, **caractérisé en ce que** les barrettes (16) opposées sont formées, dans la direction d'insertion du dispositif de maintien, d'une manière cunéiforme et conique.
